# EUROPÄISCHE PATENTSCHRIFT

(11) **EP 2 297 061 B1**
(45) Veröffentlichungstag und Bekanntmachung des Hinweises auf die Patenterteilung: **15.08.2012**
(21) Anmeldenummer: 09753796.3
(22) Anmeldetag: 14.05.2009
(51) Int. Cl.: C04B 28/08, C04B 28/26

(54) **MISCHUNG, INSBESONDERE BAUSTOFFMISCHUNG ENTHALTEND HÜTTENSAND**
MIXTURE, IN PARTICULAR CONSTRUCTION MATERIAL MIXTURE CONTAINING FURNACE SLAG
MÉLANGE, EN PARTICULIER MÉLANGE POUR MATÉRIAUX DE CONSTRUCTION CONTENANT DU SABLE DE FONDERIE

(30) Priorität: 30.05.2008 EP 08104186
(43) Veröffentlichungstag der Anmeldung: 23.03.2011
(73) Patentinhaber: Construction Research & Technology GmbH, 83308 Trostberg (DE)
(72) Erfinder: ELLENRIEDER, Florian, 86152 Augsburg (DE); VOLAND, Katja, 12163 Berlin (DE); GEHRIG, Uwe, 83368 St. Georgen (DE); BERALDO, Samuele, I-31056 Roncade (TV) (IT); RIEDMILLER, Joachim, 86316 Friedberg (DE)
(86) Internationale Anmeldenummer: PCT/EP2009/055798
(87) Internationale Veröffentlichungsnummer: WO 2009/144141

(56) Entgegenhaltungen:
- EP-A1- 1 236 702
- JP-A- 2003 049 122
- US-A- 5 073 198
- US-B1- 6 537 366
- G.QIAN, D.D.SUN,J.H.TAY: "Characterization of mercury- and zinc-doped alkali activated slag matrix, Part II. Zinc" CEMENT AND CONCRETE RESEARCH, Bd. 33, 2003, Seiten 1257-1262, XP002534425
- DATABASE WPI Week 200023 Thomson Scientific, London, GB; AN 2000-266804 XP002534426 & JP 2000 073046 A (TOTO LTD) 7. März 2000 (2000-03-07)
- DATABASE WPI Week 197750 Thomson Scientific, London, GB; AN 1977-89271Y XP002534427 & JP 52 132019 A (MATSUSHITA ELECTRIC WORKS LTD) 5. November 1977 (1977-11-05)
- DATABASE WPI Week 19836 Thomson Scientific, London, GB; AN 1983-13229K XP002534428 & JP 57 209872 A (YOIDA S) 23. Dezember 1982 (1982-12-23)

## Beschreibung

Die vorliegende Erfindung betrifft Baustoffbindemittelsysteme enthaltend Hüttensand als ein erstes Bindemittel sowie Mikrosilica und/oder Metakaolin als ein zweites Bindemittel, Zinksalze, wobei die Zinksalze von 0 bis 8 Kohlenstoffatome in ihrer Struktur aufweisen, sowie eine Alkalimetallverbindung als Aktivator. Weiterhin betrifft die Erfindung Fugenmörtel oder Beschichtungen, enthaltend die erfindungsgemäßen Baustoffbindemittelsysteme, sowie die Verwendung von Zinksalzen in Baustoffbindemittelsystemen auf Basis von Hüttensand zur Verhinderung von Verfärbungen.

Anorganische Bindemittelsysteme basierend auf reaktionsfähigen wasserunlöslichen Oxiden auf Basis von Siliziumdioxid in Verbindung mit Aluminiumoxid, die in wässrig alkalischem Medium aushärten, sind allgemein bekannt. Solche Bindemittelsysteme werden auch Geopolymere genannt und sind in EP 0 026 687, EP 0 153 097 B1 und WO 82/00816 beschrieben.

Als reaktionsfähiges Oxidgemisch kann dabei Metakaolin, Schlacke, Flugasche, aktivierter Ton oder eine Mischung daraus eingesetzt werden. Das alkalische Medium zur Aktivierung des Bindemittels besteht üblicherweise aus wässrigen Lösungen von Alkalikarbonaten, -Floriden und insbesondere Alkalihydroxid und/oder lösliches Wasserglas. Die erhärteten Bindemittel weisen dabei eine hohe mechanische und chemische Beständigkeit auf. Im Vergleich zu Zement sind diese kostengünstiger, beständiger und weisen eine günstigere CO₂-Emissions-Bilanz auf.

Hüttensand stellt eine reaktionsfähige Schlacke aus dem Hochofenprozess dar. Bindemittelsysteme auf Basis von Hüttensand als Hauptbestandteil der reaktiven Festkomponente in Verbindung mit einer wässrigen Lösung eines Alkalihydroxid und/oder Wasserglases können im Bauwesen durch Abmischung mit Füllern (Quarzsand mit entsprechender Körnung) und Additiven als Mörtel oder Betone zur Anwendung kommen. Beispielhaft sei hier die Verwendung in Fertigbauteilen, Beschichtungen und Fugenmörteln genannt.
Derartige Bindemittelsysteme und Mörtel werden in DE 3 133 503, EP 1 236 702, EP 1 081 114, JP 2 302 346, JP 4 012 043 und JP 11 079 822 beschrieben.

EP 1 236 702 A1 beschreibt eine Wasserglas enthaltende Baustoffmischung für die Herstellung von chemikalienbeständigen Mörteln auf Basis eines latent hydraulischen Bindemittels, Wasserglas sowie Metallsalz als Steuerungsmittel. Als latent hydraulischer Bestandteil kann dabei auch Hüttensand eingesetzt werden. Als Metallsalz werden Alkalisalze genannt und eingesetzt.

In der EP 0 457 516 A1 werden feuerfeste, wasserdichte, säurebeständige Binder aus Alkalisilikaten wie Mikrosilika beschrieben. In diesen Systemen werden verschiedene Metalloxide, darunter auch Zinkoxid als Abbindebeschleuniger eingesetzt.

Die CH 629 246 A5 beschreibt ein Verfahren zum Kleben einer Metallfolie auf eine Mineralfaserplatte, wobei ein Kleber aus Wasserglas, tonmineralischen Stoffen und unter anderem auch Oxiden der Erdalkalien oder des Zinks eingesetzt werden.

In der US 6 537 366 B1 werden Zusammensetzungen zum Färben von Beton beschrieben, welche wenigstens ein Derivat der Stearinsäure, ein Polymer und ein Pigment enthält. Als Stearinsäurederivat wird auch Zinkstearat aufgeführt. Die Stearinsäurederivate dienen als Hydrophobierungsmittel zur Verhinderung von Ausblühungen auf der Oberfläche von zementgebundenen Betonen. Die Schrift erwähnt nichts über die Effekte von zinkhaltigen Verbindungen als Mittel zur Verhinderung von Verfärbungen in hüttensandhaltigen Bindemittelsystemen.

G. Qian, D.D. Sun, J.H. Tay beschreiben in "Characterization of mercury- and zincdoped alkali-activated slag matrix, Part II. Zinc", Cement and Concrete Research, Bd. 33, 2003, S. 1257 - 1258, den Einfluss von Zn²⁺-Ionen auf eine alkali-aktivierte Hüttensandmatrix dahingehend, dass geringe Konzentrationen von Zn²⁺-Ionen nur einen geringen negativen Effekt bewirken. Größere Konzentrationen (2 %) wirken stark verzögernd.

US 5 073 198 beschreibt ein verbessertes Verfahren zur Herstellung eines Baustoffmaterials, umfassend mit Portlandzement als Aktivator aktivierte Schlacke, eine saure Komponente und eine basische Komponente. Bei der sauren Komponente handelt es sich um Phosphat(e), bei der basischen Komponente um Magnesiumoxid in Kombination mit Oxiden wie z.B. Zinkoxid. Die Anwesenheit von Portlandzement erhöht die mechanische Festigkeit des Baustoffmaterials.

Nachteilig bei den bekannten Baustoffmischungen auf Basis von alkalisch aktiviertem Hüttensand ist, dass es bei der Erhärtung des Systems zu Verfärbungen kommen kann. Insbesondere in Bereichen wo der Zutritt von Luftsauerstoff behindert ist zeigen sich verstärkt dunkle Verfärbungen. Es wird vermutet, dass diese Verfärbungen durch schwefelhaltige Verbindungen in der Oxidationsstufe -2 verursacht werden. Die mit diesem Bindemittelsystem hergestellten Mörtel und Betone zeigen somit kein einheitliches Farbbild. Insbesondere beim Einsatz solcher Bindemittelsysteme in sichtbaren Beschichtungen und Fugenmörteln können diese Verfärbungen zu nicht akzeptablen Ergebnissen führen.

Aufgabe war es daher, ein Baustoffbindemittelsystem auf Basis von Hüttensand bereitzustellen, das nach Applikation und Aushärtung keine Verfärbungen zeigt.

Diese Aufgabe wird mit den Merkmalen der unabhängigen Ansprüche gelöst.

Gegenstand der vorliegenden Erfindung ist demnach ein Baustoffbindemittelsystem enthaltend Hüttensand als ein erstes Bindemittel sowie Mikrosilica und/oder Metakaolin als ein zweites Bindemittel, dadurch gekennzeichnet, dass es Zinksalz enthält, wobei das Zinksalz von 0 bis 8 Kohlenstoffatome aufweist, sowie eine Alkalimetallverbindung als Aktivator.

Besonders bevorzugt sind Zinksalze, welche keine Kohlenstoffatome in ihrer Struktur aufweisen. Bevorzugt enthalten ist mindestens ein in wässrig alkalischem Medium lösliches, organisches oder anorganisches Zinksalz, besonders bevorzugt anorganisches Zinksalz.

Die erfindungsgemäßen Baustoffbindemittelsysteme bieten den Vorteil, dass sich mit ihnen kostengünstig verfärbungsfreie Mörtel und Betone, insbesondere Fugenmörtel und Beschichtungen für das Bauwesen, realisieren lassen.

Als Bindemittel können neben Hüttensand sowie Mikrosilica und/oder Metakaolin in den erfindungsgemäßen Baustoffbindemittelsystemen weitere bekannte Bindemittel eingesetzt werden. In Frage kommen beispielsweise Kaolin, Schlacke, Flugasche, aktivierter Ton, Siliziumoxide, Traß, Puzzolanerde, Kieselgur, Diatomeenerde, Gaize, Aluminiumoxide und/oder gemischte Aluminium/Siliziumoxide. Diese Stoffe sind auch unter den Oberbegriffen latente hydraulische Binder und Puzzolane bekannt. Dabei können eines oder mehrere der genannten Bindemittel mit Hüttensand zum Einsatz kommen. Besonders bevorzugt sind Flugaschen.

Bei Hüttensand handelt es sich um granulierte Hochofenschlacke. Feingemahlener granulierter Hüttensand wird auch als Hüttensandmehl bezeichnet. Derartige Produkte sind dem Fachmann als Bindemittel allgemein bekannt. Hüttensandmehl variiert, je nach dessen Herkunft und seiner Aufbereitungsform, in seiner Mahlfeinheit und Korngrößenverteilung, wobei die Mahlfeinheit Einfluss auf die Reaktivität des Hüttensandmehls hat. Als Kenngröße für die Mahlfeinheit wird der Blainewert herangezogen. Der Hüttensand, bzw. Hüttensandmehl kann allgemein für durch alkalische Aktivierung abbindende Baustoffmischungen in bekannter Form eingesetzt werden. Bevorzugt ist Hüttensand, der einen Blainewert von größer 2000 cm²/g, besonders bevorzugt größer 3000 cm²/g aufweist. Insbesondere kommt Hüttensand in Frage, der einen Blainewert zwischen 2000 bis 10000 cm²/g, insbesondere bevorzugt zwischen 3000 und 5000 cm²/g aufweist. Besonders bevorzugt gemäß der vorliegenden Erfindung ist Hüttensand, der zwischen 30 und 45 Gew.-% CaO, zwischen 30 und 45 Gew.-% SiO₂, zwischen 5 und 15 Gew.-% Al₂O₃ und zwischen 4 und 17 Gew.-% MgO enthält.

Das erfindungsgemäße Baustoffbindemittelsystem enthält als Aktivator vorzugsweise pulverförmigen Aktivator, besonders bevorzugt Alkalimetallhydroxid, Alkalimetallsilikat, insbesondere alkalisches Kaliwasserglas, Alkalimetallaluminat, Alkalimetallcarbonat und/oder Alkalimetallsulfate. Allgemein handelt es sich beim Alkalimetall um Natrium, Kalium oder Lithium.

Das Alkalimetallsilikat kann Na-, K- oder Lithiumwasserglas sein, bevorzugt Kaliwasserglas. Das Modul (Mol-Verhältnis SiO₂ zu Alkalioxid) des Wasserglases beträgt vorzugsweise kleiner 4, besonders bevorzugt kleiner 2. Im Fall von Wasserglaspulver beträgt das Modul zweckmäßig kleiner als 5, bevorzugt zwischen 1 und 4, besonders bevorzugt zwischen 1 und 3. Bei der oben genannten Alkalimetallverbindung als Aktivator kann es sich auch um Natrium-, Kalium- und Lithiumhydroxid handeln.

Des Weiteren enthält das erfindungsgemäße Baustoffbindemittelsystem die folgenden Komponenten vorzugsweise in folgenden Anteilen: zwischen 0,001 und 10 Gew.-% Zinksalz, zwischen 5 und 50 Gew.-% Hüttensand, zwischen 5 und 50 Gew.-% Aktivator, wobei die Gewichtsangaben jeweils bezogen sind auf das Gesamtgewicht des Baustoffbindemittelsystems.

Als erfindungsgemäßes Zinksalz können unter der Voraussetzung, dass das Zinksalz von 0 bis 8 Kohlenstoffatome in seiner Struktur aufweist in den Mischungen allgemein bekannte Verbindungen eingesetzt werden, beispielsweise organische (beispielsweise Zinksalze organischer Carbonsäuren) oder anorganische Zinksalze, bevorzugt auf der Basis von Zn²⁺, besonders bevorzugt anorganische Zinksalze, insbesondere anorganische Zinksalze, die in wässrigem alkalischem Medium löslich sind. Bevorzugt werden als Zinksalz Zinkoxid, Zinkfluorid und/oder Zinksulfat eingesetzt. Auch Zinkchlorid kann eingesetzt werden, ist aber wegen seines Chloridgehalts in größeren Mengen weniger erwünscht. Insbesondere bevorzugt wird Zinkoxid eingesetzt, welches in wässriger alkalischer Lösung gut löslich ist.

Besonders bevorzugt sind im Baustoffbindemittelsystem 0,1 bis 7 Gew.-% und insbesondere 0,5 bis 5 Gew.-% Zinksalz enthalten. Zinksalze mit mehr als acht Kohlenstoffatomen pro Struktureinheit, wie zum Beispiel Zinkstearat, weisen den Nachteil auf, dass vermutlich aufgrund ihrer hydrophoben Struktur die Festigkeiten der Baustoffmischungen negativ beeinflusst werden. Auch wird das erhärtete Baustoffmaterial poröser und damit weniger haltbar. Es ist grundsätzlich möglich die genannten Zinksalze alleine oder Mischungen von verschiedenen Zinksalzen zu verwenden.

Die erfindungsgemäßen Zinksalze können bevorzugt in Pulverform in die Hüttensandmehl enthaltende Mischung eingemischt werden. Bevorzugt wird das Zinksalz in die pulverförmige hüttensandhaltige Bindemittelmischung untergemischt.

Es ist auch möglich die Zinksalze als Lösung in einem vorstehend beschriebenen Aktivator einzusetzen. Vor dem Anmischen des Bindemittels mit der wässrigen Aktivatorlösung kann dabei bevorzugt das Zinksalz in der wässrigen Aktivatorlösung aufgelöst werden.

Beim Zinksalz handelt es sich vorzugsweise um ein gemahlenes Salz, welches bevorzugt Körngrößen mit einem d₉₀-Wert kleiner 90 µm aufweist. Die Lösungsgeschwindigkeit des Zinksalzes erhöht sich mit steigender Mahlfeinheit.

Bevorzugt ist der vorstehend beschriebene Aktivator pulverförmig. Man spricht in diesem Fall von einem Einkomponentensystem, welches dann durch die Zugabe von Wasser zum Erhärten gebracht werden kann. Der Aktivator dient der Beschleunigung des Abbindeprozesses der Bindemittel.

Der Aktivator kann auch in Form einer Lösung zum Einsatz kommen. In diesem Fall wird üblicherweise die Aktivatorlösung mit einer Mischung aus Hüttensandmehl und den weiteren Bindemitteln vermischt, worauf das Aushärten einsetzt..

Gegebenenfalls können zwischen 0 und 80 Gew.-%, besonders bevorzugt zwischen 30 und 70 Gew.-% Füllstoffe, und gegebenenfalls zwischen 0 und 15 Gew.-% sich von den vorstehend genannten Komponenten unterscheidende Additive im Baustoffbindemittelsystem enthalten sein. Die Gewichtsangaben sind jeweils bezogen auf das Gesamtgewicht des Baustoffbindemittelsystems.

Das erfindungsgemäße Baustoffbindemittelsystem wird vorzugsweise zur Herstellung von Mörteln und Betonen verwendet. Zur Herstellung solcher Mörtel und Betone wird das Baustoffbindemittelsystem üblicherweise mit weiteren Komponenten wie Füllstoffen, latent hydraulischen Stoffen und weiteren Additiven, gemischt. Die Zugabe des pulverförmigen Aktivators erfolgt dabei bevorzugt bevor die genannten Komponenten mit Wasser angemischt werden, sodass ein sogenannter Werktrockenmörtel hergestellt wird. So liegt die Aktivierungskomponente in pulverförmiger Form, bevorzugt als Mischung mit den Bindemitteln und/oder Sand vor. Alternativ kann eine wässrige, bevorzugt alkalische Aktivierungslösung zu den anderen pulverförmigen Komponenten zugegeben werden. In diesem Fall spricht man dann von einem zweikomponentigen Bindemittel.

Als Füllstoff kommen allgemein bekannte Kiese, Sande und/oder Mehle in Frage, beispielsweise auf der Basis von Quarz, Kalkstein, Schwerspat oder Tone. Auch Leichtfüllstoffe wie Perlite, Kieselgur (Diatomeenerde), Blähglimmer (Vermiculit) und Schaumsand können verwendet werden. Der Anteil der Füllstoffe im Mörtel oder Beton kann dabei üblicherweise je nach Anwendung zwischen 0 und 80 Gew.-% bezogen auf das Gesamtgewicht des Mörtels oder Betons betragen.

Als Additive kommen allgemein bekannte Fließmittel, Entschäumer, Wasserretentionsmittel, Pigmente, Fasern, Dispersionspulver, Netzmittel, Verzögerer, Beschleuniger, Komplexbildner, wässrige Dispersionen und Rheologiemodifizierer in Betracht.

Die Erfindung betrifft weiterhin die Verwendung von Zinksalzen in Baustoffbindemittelsystemen auf Basis von Hüttensand zur Verhinderung von Verfärbungen. Bevorzugt werden dabei Zinksalze verwendet, die von 0 bis 8 Kohlenstoffatome in ihrer Struktur aufweisen.

Weiterhin betrifft die vorliegende Erfindung Fugenmörtel oder Beschichtungen, welche die erfindungsgemäßen Baustoffbindemittelsysteme enthalten.

### Beispiele:

### Herstellung des Bindemittelleims:

Zuerst werden alle pulverförmigen Bestandteile vorgemischt und dann mit Wasser bzw. wie bei M1, M2, M1v, M2v mit der flüssigen Aktivierungskomponente in Anlehnung an DIN EN 196 zu einem homogenen Bindemittelleim gerührt.

### Herstellung der Probekörper:

Aus dem angerührten Bindemittelleim werden laut DIN EN 196 Probekörperprismen mit den Massen 4 x 4 x 16 cm hergestellt und in Anlehnung an die genannte Norm gelagert. Anschliessend erfolgt eine augenscheinliche Prüfung auf Verfärbungen.

Die Beispielrezepturen sind in untenstehender Tabelle zusammengefasst.

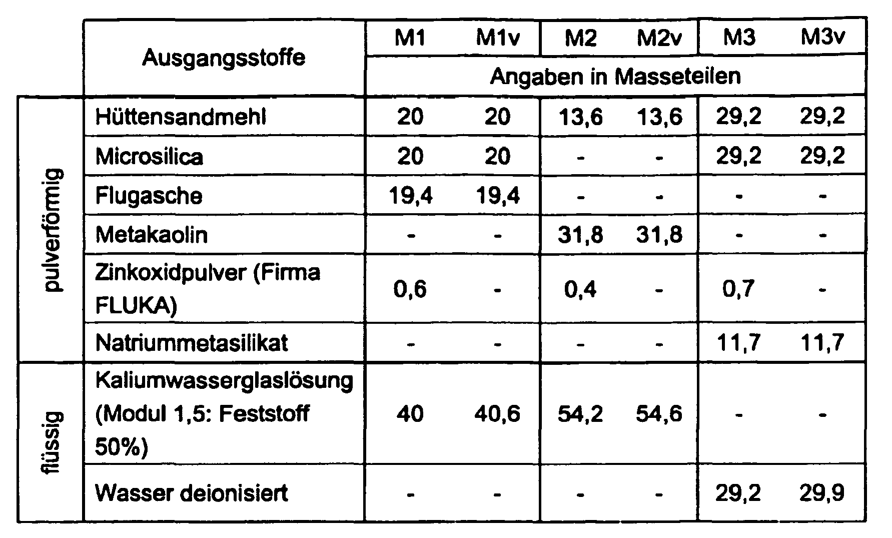

Die erfindungsgemäßen Mischungen M1 und M2 sind zweikomponentige Mischungen, bei M3 handelt es sich um ein einkomponentiges Bindemittel, das mit Wasser wie angegeben angemischt wird. Die mit V gekennzeichneten Baustoffmischungen (M1 v bis M3 v) enthalten keine Zinksalze und sind als Vergleichsbeispiele zu betrachten.

Bereits nach 24 Stunden stellt man bei der augenscheinlichen Prüfung deutlich fest, dass die zinksalzhaltigen Proben M1 (zementgrau), M2 (beige bis sandfarben) und M3 (hellgrau) keine dunklen Verfärbungen zeigen. Das Farbbild der Baustoffmassen erscheint einheitlich.

Die zinksalzfreien Proben der Mischungen M1v. M2v und M3v dagegen sind wesentlich dunkler bis grünschwarz verfärbt. Diese Verfärbung tritt nach dem Anrühren der Mischungen auf und verstärkt sich. Die dunklen Verfärbungen bleiben auch nach einer 28-tägigen Normlagerung erhalten. Meistens sind die Verfärbungen inhomogen, was den optischen Eindruck besonders beeinträchtigt.

## Patentansprüche

1. Baustoffbindemittelsystem enthaltend Hüttensand als ein erstes Bindemittel sowie Mikrosilica und/oder Metakaolin als ein zweites Bindemittel, **dadurch gekennzeichnet, dass** es Zinksalz enthält, wobei das Zinksalz von 0 bis 8 Kohlenstoffatome aufweist, sowie eine Alkalimetallverbindung als Aktivator.

2. Baustoffbindemittelsystem nach Anspruch 1, **dadurch gekennzeichnet, dass** es als weiteres Bindemittel Flugaschen enthält.

3. Baustoffbindemittelsystem nach einem der Ansprüche 1 bis 2, **dadurch gekennzeichnet, dass** der Hüttensand eine spezifische Oberfläche (Blainewert) von größer 2000 cm²/g aufweist.

4. Baustoffbindemittelsystem nach einem der Ansprüche 1 bis 3, **dadurch gekennzeichnet, dass** es pulverförmigen Aktivator enthält.

5. Baustoffbindemittelsystem nach einem der Ansprüche 1 bis 4, **dadurch gekennzeichnet, dass** es als Aktivator Alkalimetallhydroxid, Alkalimetallsilikat, vorzugsweise alkalisches Kaliwasserglas, Alkalimetallaluminat, Alkalimetallcarbonat und/oder Alkalimetallsulfate enthält.

6. Baustoffbindemittelsystem nach einem der Ansprüche 1 bis 5, **dadurch gekennzeichnet, dass** es die folgenden Komponenten enthält:
zwischen 0,001 und 10 Gew.-% Zinksalz,
zwischen 5 und 50 Gew.-% Hüttensand,
zwischen 5 und 50 Gew.-% Aktivator,
wobei die Gewichtsangaben jeweils bezogen sind auf das Gesamtgewicht des Baustoffbindemittelsystems.

7. Baustoffbindemittelsystem nach einem der Ansprüche 1 bis 6, **dadurch gekennzeichnet, dass** es als Zinksalz Zinkoxid, Zinkfluorid und/oder Zinksulfat enthält.

8. Verwendung von Zinksalzen mit 0 bis 8 Kohlenstoffatomen in einem Baustoffbindemittelsystem nach einem der Ansprüche 1 bis 7 zur Verhinderung von Verfärbungen.

9. Fugenmörtel oder Beschichtungen enthaltend ein Baustoffbindemittelsystem nach einem der Ansprüche 1 bis 7.

## Claims

1. Building material binder system containing slag sand as a first binder and microsilica and/or metakaolin as a second binder, **characterized in that** it contains a zinc salt, the zinc salt having from 0 to 8 carbon atoms, and an alkali metal compound as an activator.

2. Building material binder system according to Claim 1, **characterized in that** it contains fly ashes as a further binder.

3. Building material binder system according to either of Claims 1 and 2, **characterized in that** the slag sand has a specific surface area (Blaine value) of greater than 2000 cm²/g.

4. Building material binder system according to any of Claims 1 to 3, **characterized in that** it contains a pulverulent activator.

5. Building material binder system according to any of Claims 1 to 4, **characterized in that** it contains alkali metal hydroxide, alkali metal silicate, preferably alkaline potassium waterglass, alkali metal aluminate, alkali metal carbonate and/or alkali metal sulphates as the activator.

6. Building material binder system according to any of Claims 1 to 5, **characterized in that** it contains the following components:
between 0.001 and 10% by weight of zinc salt,
between 5 and 50% by weight of slag sand,
between 5 and 50% by weight of activator,
the weight data being based in each case on the total weight of the building material binder system.

7. Building material binder system according to any of Claims 1 to 6, **characterized in that** it contains zinc oxide, zinc fluoride and/or zinc sulphate as the zinc salt.

8. Use of zinc salts having from 0 to 8 carbon atoms in a building material binder system according to any of Claims 1 to 7 for preventing discolorations.

9. Jointing mortars or coatings containing a building material binder system according to any of Claims 1 to 7.

## Revendications

1. Système de liant pour matériaux de construction contenant du sable de fonderie en tant qu'un premier liant ainsi que de la microsilice et/ou du métakaolin en tant qu'un deuxième liant, **caractérisé en ce qu'**il contient un sel de zinc, le sel de zinc ayant de 0 à 8 atomes de carbone, ainsi qu'un composé de métal alcalin en tant qu'activateur.

2. Système de liant pour matériaux de construction selon la revendication 1, **caractérisé en ce qu'**il contient comme autre liant des cendres volantes.

3. Système de liant pour matériaux de construction selon la revendication 1 ou 2, **caractérisé en ce que** le sable de fonderie présente une surface spécifique (surface spécifique Blaine) supérieure à 2 000 cm²/g.

4. Système de liant pour matériaux de construction selon l'une quelconque des revendications 1 à 3, **caractérisé en ce qu'**il contient un activateur pulvérulent.

5. Système de liant pour matériaux de construction selon l'une quelconque des revendications 1 à 4, **caractérisé en ce qu'**il contient comme activateur un hydroxyde de métal alcalin, un silicate de métal alcalin, de préférence de l'orthosilicate de potassium alcalin, un aluminate de métal alcalin, un carbonate de métal alcalin et/ou des sulfates de métaux alcalins.

6. Système de liant pour matériaux de construction selon l'une quelconque des revendications 1 à 5, **caractérisé en ce qu'**il contient les composants suivantes :
entre 0,001 et 10 % en poids de sel de zinc,
entre 5 et 50 % en poids de sable de fonderie,
entre 5 et 50 % en poids d'activateur,
les données pondérales étant chaque fois par rapport au poids total du système de liant pour matériaux de construction.

7. Système de liant pour matériaux de construction selon l'une quelconque des revendications 1 à 6, **caractérisé en ce qu'**il contient comme sel de zinc de l'oxyde de zinc, du fluorure de zinc et/ou du sulfate de zinc.

8. Utilisation de sels de zinc ayant de 0 à 8 atomes de carbone, dans un système de liant pour matériaux de construction selon l'une quelconque des revendications 1 à 7, pour empêcher des colorations.

9. Mortiers pour joints ou revêtements contenant un système de liant pour matériaux de construction selon l'une quelconque des revendications 1 à 7.
